# EUROPÄISCHE PATENTSCHRIFT

(11) **EP 1 205 426 B1**
(45) Veröffentlichungstag und Bekanntmachung des Hinweises auf die Patenterteilung: **25.02.2004**
(21) Anmeldenummer: 01125699.7
(22) Anmeldetag: 27.10.2001
(51) Int. Cl.: B66F 9/075, B60K 1/04, B66F 9/20

(54) **Flurförderzeug mit einem in Querrichtung ausgerichteten Fahrerplatz**
Fork lift truck with transverse seat
Chariot élévateur à fourches avec siège transversal

(30) Priorität: 08.11.2000 DE 10055306
(43) Veröffentlichungstag der Anmeldung: 15.05.2002
(73) Patentinhaber: STILL WAGNER GmbH & Co KG, 72766 Reutlingen-Mittelstadt (DE)
(72) Erfinder: Marquart, Jürgen, Dipl.-Ing., 75331 Engelsbrand (DE)
(74) Vertreter: Lang, Michael

(56) Entgegenhaltungen:
- WO-A-99/10271
- DE-A- 19 732 888
- US-A- 3 027 961
- US-A- 5 297 645
- US-A- 5 520 258

## Beschreibung

Die Erfindung betrifft ein Flurförderzeug mit einem Antriebsteil, der einen quer zur Längsachse des Flurförderzeugs ausgerichteten Fahrerplatz aufweist, welchem Bedienelemente des Flurförderzeugs zugeordnet sind, mit einem vorzugsweise als Gabel ausgeführten Lastaufnahmemittel und mit einem zwischen dem Antriebsteil und dem Lastaufnahmemittel angeordneten Batteriefach, wobei oberhalb des Batteriefachs ein schwenkbarer Deckel angeordnet ist, mit dem das Batteriefach verschließbar ist und der Deckel mindestens eine Aufnahme für ein Bedienelement des Flurförderzeugs aufweist.

Gattungsgemäße Flurförderzeuge sind häufig als Fahrersitzhubwagen oder als Fahrerstandhubwagen ausgeführt. Zwischen dem Fahrerplatz und dem anhebbaren Lastaufnahmemittel, welches in der Regel als Gabel ausgeführt ist, befindet sich ein Batteriefach. In dem Batteriefach ist ein Batterieblock angeordnet, der die für den Antrieb des Flurförderzeugs erforderliche elektrische Energie zur Verfügung stellt. Das Batteriefach ist nach oben durch einen Deckel verschließbar, der um eine im Wesentlichen horizontale Achse schwenkbar ist. Der Deckel sichert den Batterieblock vor unbeabsichtigtem Zugriff und verhindert bei einem Unfall das Herausfallen des Batterieblocks aus dem Batteriefach.

Flurförderzeuge der genannten Art weisen eine Reihe von Bedienelementen, z.B. zur Steuerung eines Fahrantriebs, einer Hubvorrichtung und einer Hupe, auf. Die Bedienelemente sind dabei direkt an dem Deckel befestigt, der somit gleichzeitig zur Abdeckung des Batterieblocks und zur Befestigung mindestens eines Bedienelements dient. Die Aufnahme für das Bedienelement kann beispielsweise von einer Öffnung gebildet sein, in der das Bedienelement angeordnet ist.

Aus der US-A-5 520 258 ist ein gattungsgemäßes Flurförderzeug nach dem Oberbegriff des Anspruchs 1 bekannt, bei dem als Fingerhebel und Druckknöpfe ausgebildete Bedienelemente an einem schwenkbaren Deckel oberhalb des Batterieblocks angeordnet sind. Während der Betätigung der Bedienelemente kann die Bedienperson ihren Unterarm auf dem Deckel abstützen.

Der Erfindung liegt die Aufgabe zugrunde, ein Flurförderzeug der eingangs genannten Art zur Verfügung zu stellen, bei dem die Bedienelemente in platzsparender und ergonomisch vorteilhafter Weise angeordnet sind.

Diese Aufgabe wird erfindungsgemäß dadurch gelöst, dass der Deckel mindestens eine Halterung für einen Handgriff aufweist, der derart angeordnet ist, dass mindestens ein Bedienelement mit den Fingern einer den Handgriff umgreifenden Hand erreichbar ist. Der Handgriff, an dem sich die Bedienperson während des Betriebs des Flurförderzeugs festhalten kann, wird an der in den Deckel eingearbeiteten Halterung befestigt. Vorzugsweise sind mit der den Handgriff umgreifenden Hand sämtliche Bedienelemente für den Fahrantrieb, die Hubvorrichtung und die Hupe erreichbar, da dann zum Betätigen der am häufigsten verwendeten Funktionen kein Umgreifen und kein Loslassen des Handgriffs erforderlich ist

Gemäß einer zweckmäßigen Ausgestaltung der Erfindung weist der Deckel mindestens eine Aufnahme für ein Bedienelement für den Fahrantrieb auf, wobei das Bedienelement für den Fahrantrieb vorzugsweise als Drehschalter ausgeführt ist. In diesem Fall kann die Aufnahme beispielsweise von einer Öffnung gebildet sein, durch die eine drehbare Achse des Bedienelements ragt, so dass sich eine Betätigungsfläche des Bedienelements an der Oberseite und ein dem Bedienelement zugeordneter Signalgeber an der Unterseite des Deckels befindet.

Ebenfalls zweckmäßig ist es, wenn der Deckel mindestens eine Aufnahme für mindestens ein Bedienelement für eine Hubvorrichtung und/oder für eine Hupe aufweist, wobei die Bedienelemente für die Hubvorrichtung und/oder für die Hupe vorzugsweise als Tastschalter ausgeführt sind. Die Betätigungsfläche ragt hierbei von unten durch die als Öffnung ausgeführte Aufnahme. Der dem Bedienelement zugeordnete Signalgeber befindet sich ebenfalls auf der Unterseite des Deckels.

Vorzugsweise ist jedem Bedienelement mindestens ein elektrischer Signalgeber zugeordnet, die im Bereich der Unterseite des Deckels angeordnet sind. Die Signalgeber können von einstufigen, mehrstufigen oder stufenlosen Schaltern gebildet und als Tastschalter oder Drehschalter ausgeführt sein. Die Anordnung im Bereich der Unterseite des Deckels schützt die Signalgeber vor äußeren Einflüssen und ermöglicht eine freie Gestaltung der Oberseite des Deckels, insbesondere im Hinblick auf ergonomische Gesichtspunkte.

Eine einfache Herstellung und Montage wird ermöglicht, wenn die Signalgeber für den Fahrantrieb, die Hubvorrichtung und die Hupe auf einer gemeinsamen Platine angeordnet sind und vorzugsweise von Folienschaltem gebildet sind. Eine derartige Platine mit Folienschaltem für die Betätigungsanordnung eines Flurförderzeugs ist beispielsweise in der DE 197 32 888 A1 offenbart.

Weiterhin weist der Deckel eine Auflagefläche für einen Arm der Bedienperson auf. Auf dieser Auflagefläche kann die Bedienperson ihren Arm abstützen, während sich die Hand an dem oben erwähnten Handgriff befindet.

Eine besonders flexible Formgebung des Deckels wird ermöglicht, wenn der Deckel ein Kunststoffbauteil aufweist, das im Wesentlichen die Oberseite des Deckels bildet. Der Deckel kann hierbei, abgesehen von Schamieren, Verriegelungselementen etc., vollständig aus Kunststoff hergestellt sein.

Zweckmäßigerweise sind die Aufnahme für mindestens ein Bedienelement und/oder die Halterung für den Handgriff und/oder die Auflagefläche für den Arm in das Kunststoffbauteil eingeformt. Es sind hierfür somit keine separaten Bauteile und keine dem Urformen des Kunststoffs nachgeschaltete Bearbeitungsschritte erforderlich.

Bei der beschriebenen Anordnung ist der Batterieblock dadurch zugänglich, dass der Deckel um eine im Wesentlichen horizontale Achse schwenkbar ist. Während des Betriebs ist der Deckel heruntergeklappt. Der Batterieblock wird zugänglich, indem der Deckel gemeinsam mit den daran befestigten Bedienelementen und elektrischen Einrichtungen, z. B. der Platine mit den Signalgebem, nach oben geschwenkt wird. Die Schwenkbewegung des Deckels kann gegebenenfalls mittels einer Gasfeder unterstützt werden.

Weitere Vorteile und Einzelheiten der Erfindung werden Anhand des in den schematischen Figuren dargestellten Ausführungsbeispiels näher erläutert. Dabei zeigt
- Figur 1: einen Antriebsteil eines erfindungsgemäßen Flurförderzeugs,
- Figur 2: einen Deckel für das Batteriefach.

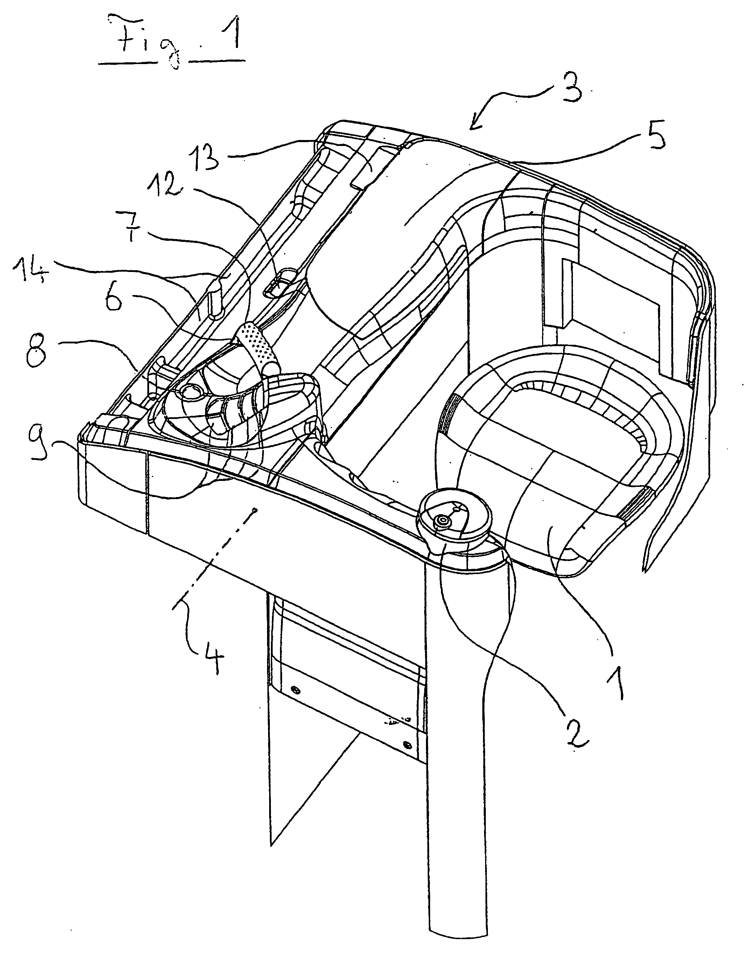

Figur 1 zeigt einen Antriebsteil eines erfindungsgemäßen Flurförderzeugs in perspektivischer Ansicht. Zu erkennen ist ein quer zur Hauptfahrtrichtung des Flurförderzeugs angeordneter Fahrersitz 1. Vor dem Fahrersitz 1 ist auf einer Seitenwand des Antriebsteils ein Lenkrad 2 angeordnet, das zur Betätigung durch die linke Hand des Fahrers vorgesehen ist Auf der rechten Seite des Fahrersitzes befindet sich ein Deckel 3 für ein Batteriefach, der sich zumindest annähernd über die gesamte Breite des Flurförderzeugs erstreckt. Der Deckel 3 kann um eine im Wesentlichen horizontale Achse 4 nach oben geschwenkt werden, so dass ein unter dem Deckel 3 angeordneter, nicht dargestellter Batterieblock zugänglich wird. An den Batterieblock schließt sich ein ebenfalls nicht dargestelltes Lastaufnahmemittel an, das in der Regel als anhebbare Lastgabel ausgeführt ist.

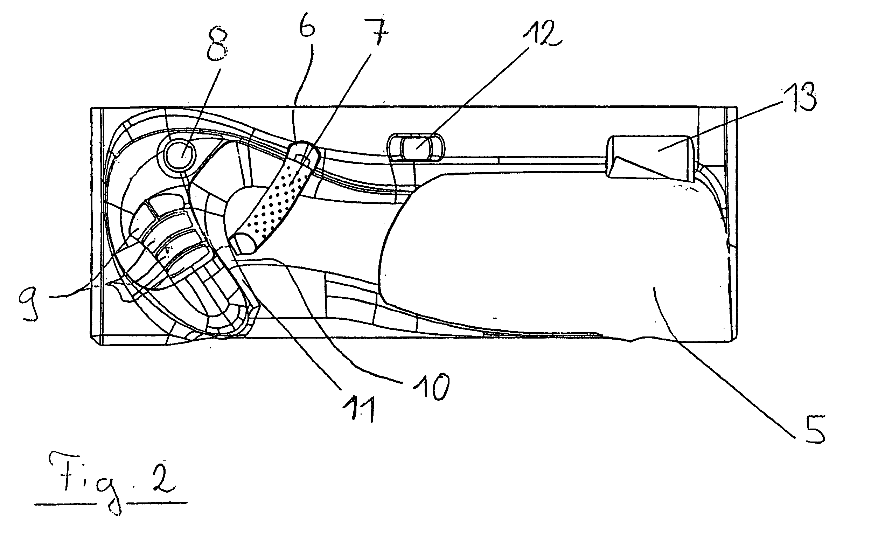

Die Oberfläche des Deckels 3 ist von einem einzigen Kunststoffteil gebildet, in das erfindungsgemäß eine Vielzahl von funktionellen Elementen eingeformt ist. Diese funktionellen Elemente sind:
- eine Auflagefläche 5 für den rechten Arm der Bedienperson,
- eine Halterung 6 für einen Handgriff 7,
- eine Aufnahme 8 für einen Notaustaster,
- Aufnahmen 9 für Tastschalter zur Betätigung einer Hubvorrichtung und einer Hupe,
- eine Aufnahme (Fig. 2, Pos. 10) für einen Drehschalter zur Betätigung eines Fahrantriebs,
- eine Aufnahme (Fig. 2, Pos. 11) für einen Schlüsselschalter,
- eine Öffnung 12 zur Aufnahme eines Verschlussmechanismus für den Deckel 3 und
- eine Öffnung 13 zur Aufnahme eines Batteriesteckers.

Die Aufnahmen 9,10 für die Bedienelemente sind so angeordnet, dass die Bedienelemente mit den Fingern der rechten Hand der Bedienperson erreichbar sind, wenn die Hand den Handgriff 7 umgreift und der Arm auf der Auflagefläche 5 aufliegt. Die den Bedienelementen zugeordneten elektrischen Schaltelemente sind an der Unterseite des Deckels 3 befestigt und sind gemeinsam mit dem Deckel 3 um die Achse 4 schwenkbar. Lastseitig schließt sich an den Deckel 3 ein nicht schwenkbares Ablagefach 14 an, das bei Ausführungen des Flurförderzeugs mit Hubgerüst durch das Hubgerüst ersetzt wird.

Figur 2 zeigt den Deckel 3 für das Batteriefach in Draufsicht. Zu erkennen sind hier insbesondere die Aufnahme 10 für den Drehschalter für den Fahrantrieb, der mit dem Daumen der den Handgriff 7 umgreifenden Hand betätigbar ist, und die Aufnahme 11 für den Schlüsselschalter des Flurförderzeugs.

## Patentansprüche

1. Flurförderzeug mit einem Antriebsteil, der einen quer zur Längsachse des Flurförderzeugs ausgerichteten Fahrerplatz aufweist, welchem Bedienelemente des Flurförderzeugs zugeordnet sind, mit einem vorzugsweise als Gabel ausgeführten Lastaufnahmemittel und mit einem zwischen dem Antriebsteil und dem Lastaufnahmemittel angeordneten Batteriefach, wobei oberhalb des Batteriefachs ein schwenkbarer Deckel (3) angeordnet ist, mit dem das Batteriefach verschließbar ist und der Deckel (3) mindestens eine Aufnahme (9, 10) für ein Bedienelement des Flurförderzeugs aufweist, **dadurch gekennzeichnet, dass** der Deckel (3) mindestens eine Halterung (6) für einen Handgriff (7) aufweist, der derart angeordnet ist, dass mindestens ein Bedienelement mit den Fingern einer den Handgriff (7) umgreifenden Hand erreichbar ist.

2. Flurförderzeug nach Anspruch 1, **dadurch gekennzeichnet, dass** der Deckel (3) mindestens eine Aufnahme (10) für ein Bedienelement für den Fahrantrieb aufweist, wobei das Bedienelement für den Fahrantrieb vorzugsweise als Drehschalter ausgeführt ist.

3. Flurförderzeug nach Anspruch 1 oder 2, **dadurch gekennzeichnet, dass** der Deckel (3) mindestens eine Aufnahme (9) für mindestens ein Bedienelement für eine Hubvorrichtung und/oder für eine Hupe aufweist, wobei die Bedienelemente für die Hubvorrichtung und/oder für die Hupe vorzugsweise als Tastschalter ausgeführt sind.

4. Flurförderzeug nach einem der Ansprüche 1 bis 3, **dadurch gekennzeichnet, dass** jedem Bedienelement mindestens ein elektrischer Signalgeber zugeordnet ist, die im Bereich der Unterseite des Deckels angeordnet sind.

5. Flurförderzeug nach Anspruch 4, **dadurch gekennzeichnet, dass** die Signalgeber für den Fahrantrieb, die Hubvorrichtung und die Hupe auf einer gemeinsamen Platine angeordnet sind und vorzugsweise von Folienschaltern gebildet sind.

6. Flurförderzeug nach einem der Ansprüche 1 bis 5, **dadurch gekennzeichnet, dass** der Deckel (3) eine Auflagefläche (5) für einen Arm der Bedienperson aufweist.

7. Flurförderzeug nach einem der Ansprüche 1 bis 6, **dadurch gekennzeichnet, dass** der Deckel (3) ein Kunststoffbauteil aufweist, das im Wesentlichen die Oberseite des Deckels bildet.

8. Flurförderzeug nach einem der Ansprüche 1 bis 7, **dadurch gekennzeichnet, dass** die Aufnahme (9, 10) für mindestens ein Bedienelement und/oder die Halterung (6) für den Handgriff (7) und/oder die Auflagefläche für den Arm in das Kunststoffbauteil eingeformt sind.

9. Flurförderzeug nach einem der Ansprüche 1 bis 8, **dadurch gekennzeichnet, dass** der Deckel (3) um eine im Wesentlichen horizontale Achse (4) schwenkbar ist.

## Claims

1. Fork-lift truck comprising a drive part, which has a driver's seat aligned transversely with respect to the longitudinal axis of the fork-lift truck and to which operating elements of the fork-lift truck are assigned, comprising a load-lifting means, preferably designed as a fork, and comprising a battery compartment arranged between the drive part and the load-lifting means, a pivotable cover (3) being arranged above the battery compartment, with which cover the battery compartment can be closed, and the cover (3) having at least one holder (9, 10) for an operating element of the fork-lift truck, **characterized in that** the cover (3) has at least one mounting (6) for a handle (7) which is arranged in such a way that at least one operating element can be reached with the fingers of a hand gripping the handle (7).

2. Fork-lift truck according to Claim 1, **characterized in that** the cover (3) has at least one holder (10) for an operating element for the traction drive, the operating element for the traction drive preferably being designed as a rotary switch.

3. Fork-lift truck according to Claim 1 or 2, **characterized in that** the cover (3) has at least one holder (9) for at least one operating element for a lifting device and/or for a horn, the operating elements for the lifting device and/or for the horn preferably being designed as momentary-contact switches.

4. Fork-lift truck according to one of Claims 1 to 3, **characterized in that** each operating element is assigned at least one electric signal generator, which are arranged in the region of the underside of the cover.

5. Fork-lift truck according to Claim 4, **characterized in that** the signal generators for the traction drive, the lifting device and the horn are arranged on a common circuit board and are preferably formed by film switches.

6. Fork-lift truck according to one of Claims 1 to 5, **characterized in that** the cover (3) has a supporting surface (5) for an arm of the operator.

7. Fork-lift truck according to one of Claims 1 to 6, **characterized in that** the cover (3) has a plastic component which substantially forms the upper side of the cover.

8. Fork-lift truck according to one of Claims 1 to 7, **characterized in that** the holder (9, 10) for at least one operating element and/or the mounting(6) for the handle (7) and/or the supporting surface for the arm are moulded into the plastic component.

9. Fork-lift truck according to one of Claims 1 to 8, **characterized in that** the cover (3) can be pivoted about a substantially horizontal axis (4).

## Revendications

1. Chariot de manutention comprenant une partie d'entraînement qui présente un poste de conduite orienté transversalement à l'axe longitudinal du chariot de manutention, auquel sont associés des éléments de commande du chariot de manutention, avec un moyen de réception de charge réalisé de préférence en forme de fourche et avec un compartiment pour batterie disposé entre la partie d'entraînement et le moyen de réception de charge, un couvercle pivotant (3) étant disposé au-dessus du compartiment de batterie, avec lequel le compartiment de batterie peut être fermé, et le couvercle (3) présentant au moins un logement (9, 10) pour un élément de commande du chariot de manutention, **caractérisé en ce que** le couvercle (3) présente au moins une fixation (6) pour une poignée (7) disposée de telle sorte qu'au moins un élément de commande puisse être atteint par les doigts d'une main entourant la poignée (7).

2. Chariot de manutention selon la revendication 1, **caractérisé en ce que** le couvercle (3) présente au moins un logement (10) pour un élément de commande pour l'entraînement de conduite, l'élément de commande pour l'entraînement de conduite étant réalisé de préférence en tant qu'interrupteur rotatif.

3. Chariot de manutention selon la revendication 1 ou 2, **caractérisé en ce que** le couvercle (2) présente au moins un logement (9) pour au moins un élément de commande pour un dispositif de levage et/ou pour un klaxon, les éléments de commande pour le dispositif de levage et/ou pour le klaxon étant réalisés de préférence en tant que commutateur à touche.

4. Chariot de manutention selon l'une quelconque des revendications 1 à 3, **caractérisé en ce qu'**au moins un générateur de signaux électrique est associé à chaque élément de commande, ceux-ci étant disposés dans la région du côté inférieur du couvercle.

5. Chariot de manutention selon la revendication 4, **caractérisé en ce que** les générateurs de signaux pour l'entraînement de conduite, le dispositif de levage et le klaxon sont disposés sur une platine commune et sont formés de préférence par des interrupteurs à feuilles.

6. Chariot de manutention selon l'une quelconque des revendications 1 à 5, **caractérisé en ce que** le couvercle (3) présente une surface d'appui (5) pour un bras de l'opérateur.

7. Chariot de manutention selon l'une quelconque des revendications 1 à 6, **caractérisé en ce que** le couvercle (3) présente un composant en plastique qui forme essentiellement la partie supérieure du couvercle.

8. Chariot de manutention selon l'une quelconque des revendications 1 à 7, **caractérisé en ce que** le logement (9, 10) pour au moins un élément de commande et/ou la fixation (6) pour la poignée (7) et/ou la surface d'appui pour le bras sont formés dans le composant en plastique.

9. Chariot de manutention selon l'une quelconque des revendications 1 à 8, **caractérisé en ce que** le couvercle (3) peut pivoter autour d'un axe (4) essentiellement horizontal.
